# EUROPEAN PATENT SPECIFICATION

(11) **EP 4 037 004 B1**
(45) Date of publication and mention of the grant of the patent: **23.04.2025**
(21) Application number: 21212477.0
(22) Date of filing: 06.12.2021
(51) Int. Cl.: H01M 4/04, H01M 4/139, H01M 4/36, H01M 4/02

(54) **POSITIVE ACTIVE MATERIAL COMPOSITE PARTICLES, POSITIVE ELECTRODE SHEET, METHOD FOR PRODUCING THE POSITIVE ACTIVE MATERIAL COMPOSITE PARTICLES, AND METHOD FOR PRODUCING THE POSITIVE ELECTRODE SHEET**
POSITIVE AKTIVE MATERIALVERBUNDTEILCHEN, POSITIVE ELEKTRODENFOLIE, VERFAHREN ZUR HERSTELLUNG DER POSITIVEN AKTIVEN MATERIALVERBUNDTEILCHEN UND VERFAHREN ZUR HERSTELLUNG DER POSITIVEN ELEKTRODENFOLIE
PARTICULES COMPOSITES DE MATÉRIAU ACTIF POSITIF, FEUILLE D'ÉLECTRODE POSITIVE, PROCÉDÉ DE PRODUCTION DES PARTICULES COMPOSITES DE MATÉRIAU ACTIF POSITIF ET PROCÉDÉ DE PRODUCTION DE LA FEUILLE D'ÉLECTRODE POSITIVE

(30) Priority: 29.01.2021 JP 2021013476
(43) Date of publication of application: 03.08.2022
(73) Proprietor: Prime Planet Energy & Solutions, Inc., Chuo-ku Tokyo 103-0022 (JP)
(72) Inventor: UEZONO, Tomoyuki, Tokyo, 103-0022 (JP); OKUBO, Sokichi, Tokyo, 103-0022 (JP); MIYAJIMA, Momoka, Tokyo, 103-0022 (JP)
(74) Representative: Kuhnen & Wacker Patent- und Rechtsanwaltsbüro PartG mbB

(56) References cited:
- EP-A1- 2 717 354
- EP-A1- 3 462 522
- EP-A1- 3 886 208
- WO-A1-2014/077274
- WO-A1-2020/105735
- US-A1- 2005 064 289

## Description

### BACKGROUND

### Technical field

The present disclosure relates to positive active material composite particles, a positive electrode sheet made of the positive active material composite particles, a method for producing the positive active material composite particles, and a method for producing the positive electrode sheet.

### Related art

An example of composite particles including core particles and sub-particles carried thereon, and a method for producing the composite particles is disclosed in Patent Document 1. In the technique of this publication, agglomerates of resin particles made of a binder resin and a colorant are heated to a temperature equal to or higher than the glass transition point of the binder resin to obtain toner particles in which a plurality of particles of the colorant are bonded to each other through a binder resin part made of the resin particles. Assuming that the resin particles made of binder resin correspond to core particles, the colorant bonded to the main particles corresponds to sub-particles.

### Patent Documents

Patent Document 1: Japanese unexamined patent application publication No. 2010-049116

### SUMMARY

### Technical Problems

In a technique for manufacturing a battery, in the process of producing a positive electrode plate for the battery, a positive active material mixture layer is formed on a surface of a current collecting member. The positive active material mixture layer contains not only a positive active material but also an additive. It is therefore conceivable to form a positive active material mixture layer from composite particles containing core particles made of the positive active material and sub-particles made of the additive. The present inventors have considered applying the technique of Patent Document 1 to the production of such composite particles. However, there is a problem in applying the technique of Patent Document 1 to the production of the positive active material mixture layer. That is, the positive active material is significantly unlikely to soften as compared with the binder resin of toner. Thus, it was impossible to obtain positive active material composite particles suitable for forming the positive active material mixture layer.

The present disclosure has been made to address the above problems and has a purpose to provide positive active material composite particles suitable for forming a positive active material mixture layer, a positive electrode sheet made of the positive active material composite particles, a method for producing the positive active material composite particles, and a method for producing the positive electrode sheet.

### Means of Solving the Problems

To achieve the above-mentioned purpose, one aspect of the present disclosure provides a positive active material composite particle comprising: a positive active material particle; a conductive particle existing on a surface of the positive active material particle and having a smaller diameter than the positive active material particle; and a binder resin located on the surface of the positive active material particle bonding the surface of the positive active material particle and the conductive particle.

In the positive active material composite particle configured as above, the surface of the positive active material particle and the conductive particle are bonded through the binder resin. Thus, even when the positive active material composite particles are admixed with other particles (e.g., carrier particles) and further subjected to a deposition process, the composite particles can be maintained in a composite shape. This composite particle is suitable as a raw material of the positive active material mixture layer to be formed on the current collecting foil. The conductive particle exists on the surface of the positive active material particle, but does not need to directly contact with the positive active material particle. The conductive particle may also be fixed to the surface of the positive active material particle through the binder resin.

In the positive active material composite particle configured as above, the binder resin is distributed in a mottled state to have a plurality of portions spaced with a gap from each other and adhered to the surface of the positive active material particle, and the conductive particle is located on the binder resin distributed in the mottled state. This configuration ensures that even in the form of a positive active material composite particle, the positive active material particle itself can contact with an electrolyte solution in a battery assembled incorporating a positive electrode sheet containing the positive active material composite particles, and thus allows ion transfer without problem.

Another aspect of the present disclosure provides a positive electrode sheet comprising: a current collecting member; and a positive active material mixture layer provided on a surface of the current collecting member, wherein the positive active material mixture layer is formed by deposition of a raw material including the positive active material composite particle according to any one of the foregoing aspects on the surface of the current collecting member. Accordingly, the positive active material mixture layer is suitably made of the foregoing positive active material composite particles used as a raw material of the positive active material mixture layer.

Still another aspect of the present disclosure provides a method for producing a positive active material composite particle, the method including: mixing a group of positive active material particles, a group of conductive particles each having a smaller diameter of each positive active material particle, and a group of binder resin particles each having a smaller diameter than each positive active material particle to obtain composite particles in which the conductive particles and the binder resin particles adhere to a surface of each of the positive active material particles; and heating the composite particles obtained in the mixing to temporarily soften the binder resin particles thermally to obtain positive active material composite particles in which the binder resin is distributed in a mottled state to have a plurality of portions spaced with a gap from each other and adhered to the surface of the positive active material particle, and the conductive particles are bonded to the surface of each of the positive active material particles through the binder resin which is distributed in a mottled state.

According to the production method of the above-configured positive active material composite particle, the mixing is first performed so that the positive active material particles, the conductive particles, and the binder resin particles are mixed into a compositely-shaped state. Subsequently, the heating enhances the bonding strength between the positive active material particles and the conductive particles through the binder resin. This process can produce stable positive active material composite particles to prevent falling of the conductive particles away from the positive active material particles even when the positive active material composite particles are subsequently subjected to a depositing process.

Further, another aspect of the present disclosure provides a method for producing a positive electrode sheet, the method including: depositing positive active material composite particles on a surface of a current collecting member to obtain a deposition layer; and fixing the deposition layer obtained in the depositing on the surface of the current collecting member to form a positive active material mixture layer, and wherein the depositing uses the positive active material composite particles produced by the production method in the foregoing aspect. The positive active material composite particles having undergone the heating are used in the depositing. The deposition is thus suitably performed without causing the conductive particles to fall away from the positive active material particles.

The present disclosure configured as above can provide the positive active material composite particles suitable for forming a positive active material mixture layer, the positive electrode sheet made of the positive active material composite particles, the method for producing the positive active material composite particles and the method for producing the positive electrode sheet.

### BRIEF DESCRIPTION OF THE DRAWINGS

FIG. 1 is an external view of a positive active material composite particle in an embodiment;
FIG. 2 is a cross-sectional view showing an adhering state of additive particles on the surface of the positive active material composite particle;
FIG. 3 is an external view of an admixture; and
FIG. 4 is a perspective view of a positive electrode sheet.

### DETAILED DESCRIPTION OF THE EXEMPLARY EMBODIMENTS

A detailed description of an embodiment of this disclosure will now be given referring to the accompanying drawings. The present embodiment embodies the present disclosure relating to a positive active material of a lithium ion battery, a positive electrode sheet made of the positive active material, and a method for producing the positive active material and a method for producing the positive electrode sheet.

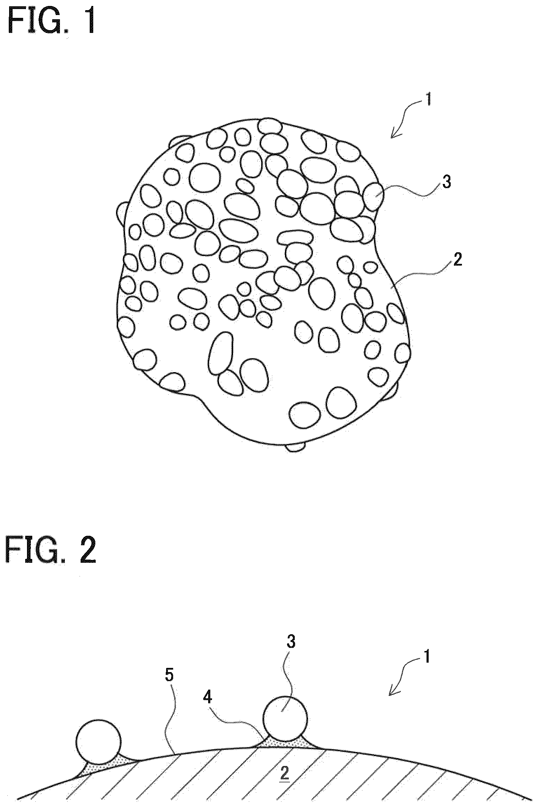

The positive active material composite particles in the present embodiment each have an external appearance shown in FIG. 1. A positive active material composite particle 1 in FIG. 1 is composed of a positive active material particle 2 and additive particles 3. The positive active material particle 2 is a particle made of the material that functions as a positive active material of a lithium ion battery, such as ternary composite metallate lithium. The additive particles 3 are particles made of the material, such as conductive material or others, to be used together with the positive active material for a positive electrode sheet of a lithium ion battery. In the following description, the additive particles 3 are the particles made of a conductive material and thus will be referred to as conductive particles 3.

The conductive particles 3 are distributed over the surface of the positive active material particle 2, clear from FIG. 1. Each of the conductive particles 3 has a smaller diameter than the positive active material particle 2. As shown in FIG. 2, the conductive particles 3 are bonded to the surface of the positive active material particle 2 by binder resin 4. This binder resin 4 is distributed here and there in a mottled state over the surface of the positive active material particle 2 to have a plurality of irregularly dispersed portions spaced with a gap from each other and adhered to the surface of the positive active material particle 2. The conductive particles 3 are located on the mottledly-distributed binder resin 4. Thus, the positive active material particle 2 and the conductive particles 3 placed on the surface of the positive active material particle 2 form a positive active material composite particle 1 configured such that the conductive particles 3 are unlikely to fall away from the positive active material particle 2. FIG. 2 illustrates the conductive particles 3, which are each located solely on one of the portions of the binder resin 4. As another example, two or more conductive particles 3 may be located together on a portion of the binder resin 4.

The surface of the positive active material particle 2 includes a bare region(s) 5 that is not covered by the binder resin 4. In each barer region 5, the positive active material particle 2 itself is exposed. In a completed battery, the bare region 5 allows ion transfer between the positive active material and the electrolyte solution. The presence of the bare region 5 having a certain degree of area ensures that a charge performance of a battery is not so disturbed by the binder resin 4.

However, this condition does not mean that the mottled portions of the binder resin 4 must be disconnected to each other. Those mottled portions of the binder resin 4 also may be connected to each other at some places. In the positive active material composite particle 1 shown in FIG. 1, the diameter of the positive active material particle 2 which is a core particle is about 3 to 10 µm, and the diameter of each conductive particle 3 which is a sub-particle is smaller than that of the main particle and is generally about 100 nm. A primary particle of the conductive particles 3 has a smaller diameter than the sub-particle. When observing the positive active material composite particle 1 with a microscope, a whole image illustrated in FIG. 1 is observable through a scanning electron microscope at a magnification of about 5000 to 20000 times.

Subsequently, a method for producing a positive electrode sheet using the above-mentioned positive active material composite particles 1 will be described below. In the present embodiment, the following raw materials are used in this production method of the positive electrode sheet.

| | |
|---|---|
| - Active material: | Lithium nickelate-cobaltate-manganate (made by Sumitomo Metal Mining Co., Ltd.) |
| - Conductive material: | Acetylene black (Li-400, made by Denka Company Ltd.) |
| - Binder resin: | Polyvinylidene fluoride (301F, made by Arkema S.A.) |
| - Mixing ratio: | Active material : Conductive material : Binder resin = 90 : 5 : 5 (wt. %) |
| - Current collecting foil: | Aluminum foil (12 µm thickness) |

The process follows the following steps:
(1) Compositing → (2) Heat treatment → (3) Admixing → (4) Deposition → (5) Fixing

The compositing (1) is a step of mixing an active material, a conductive material, and a binder resin into a composite powder. In this step, three groups of powder materials of those kinds are mixed into a composite powder state. Specifically, the three kinds of powder materials are put and agitated in an appropriate container, for example, a spherical tank of a MP mixer manufactured by Nippon Coke Industries Co., Ltd. The powder materials are agitated at 10000 rpm for about 10 minutes to obtain a composite powder. In the composite powder, the conductive particles and the binder resin particles adhere or attach to the surface of each of positive active material particles into a composite state.

The heat treatment (2) is a step of heating the composite powder obtained in the compositing (1) to a high temperature state once. Specifically, the composite powder is spread thin on a metal tray and placed for a predetermined time in a heating furnace heated to a predetermined temperature. This heating melts the binder resin temporarily, so that the conductive particles are bonded to the surface of each active material particle through the binder resin which is distributed in a mottled state. The foregoing positive active material composite particles 1 are obtained after this heat treatment step.

The admixing (3) is a step of admixing the composite powder obtained after the heat treatment with carrier particles. The carrier particles are iron powder needed for the deposition step (4). The carrier particles do not become a final component of the positive active material layer formed on the positive electrode sheet, and thus the carrier particles are not listed as the above-mentioned raw materials, but may be for example MF96-100 made by Powdertech Co., Ltd. (Diameter: about 100 µm). Both the composite powder and the carrier particles are put and agitated in an appropriate container, such as a polyethylene bottle. The mixture ratio of the composite powder and the carrier particles may be set for example as below:
Composite powder : Carrier particles = 11.6 : 88.4 (wt. %).

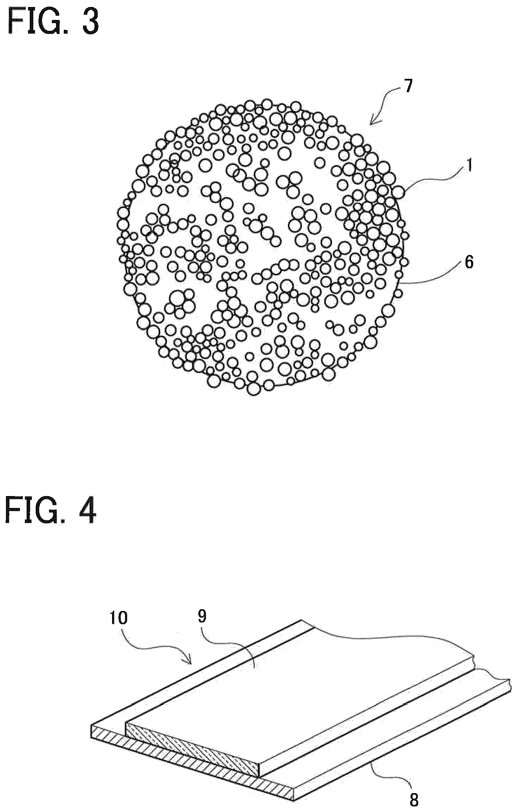

The container containing the composite powder and the carrier particles is rotated at a rotation speed of about 105 rpm. This rotation causes the composite powder and the carrier particles to be frictionally charged to be opposite in polarity, thereby making an admixture of the carrier particles and the composite powder. As shown in FIG. 3, an admixture 7 includes a number of the positive active material composite particles 1 (the composite powder) attaching to the surface of each carrier particle 6. When observing the admixture 7 with a microscope set at a magnification of about 500 to 1500 times, a whole image of the admixture 7 is observed as illustrated in FIG. 3. In the admixture 7, the positive active material composite particles 1 are simply attracted to the surface of the carrier particle 6 by electrostatic attraction. This condition is different from that the conductive particles 3 in the positive active material composite particles 1 are fixed to the surface of each of the positive active material particles 2 through the binder resin 4.

The deposition (4) is a step of forming a positive active material layer on the surface of a current collecting foil. In the present embodiment, a deposition layer of the positive active material composite particles is formed by dry deposition using an electrostatic transfer method. Specifically, the admixture is put in a developing device of an apparatus for dry deposition and then this apparatus is started. The device forms a layer of the admixture on a sleeve of a magnet roll. The layered admixture on the sleeve is delivered to a transfer position as the sleeve rotates. At the transfer position, the magnet roll and the current collecting foil face each other, and an electric field is applied therebetween. The current collecting foil is being conveyed.

Conditions of the transfer position are for example listed below:

| | |
|---|---|
| Rotation speed of Sleeve: | 14 m/min (as a peripheral speed) |
| Electric field intensity: | 150 V/m |
| Conveying speed of Current collecting foil: | 1.5 m/min (in a forward direction relative to the sleeve rotation in the present embodiment, which also may be a reverse direction). |

At the transfer position, the positive active material composite particles of the admixture detach from the carrier particles by the electric field and fly toward the current collecting foil. Accordingly, the positive active material composite particles are transferred from the sleeve to the current collecting foil. In this way, a deposition layer of the positive active material composite particles is formed on the current collecting foil by the dry process that does not use a liquid component such as a kneading solvent. This deposition layer becomes a positive active material layer. On a part of the sleeve having passed the transfer position, there is retained a layer of the carrier particles from which the positive active material composite particles have been detached. These carrier particles can be reused for admixing with composite powder.

The fixing (5) is a step of fixing the positive active material composite particles formed into a deposition layer on the current collecting foil. For this purpose, the current collecting foil and the deposition layer are heated. Since the deposition (4) is performed by the dry process, the fixing step can be carried out immediately after the deposition without needing a drying step. For example, the current collecting foil after the deposition may be sandwiched between hot plates (about 160°C) from above and below, and held for about 30 seconds under gentle pressure. This heating temporarily melts the binder resin contained in the positive active material composite particles, so that the positive active material composite particles are bonded to the current collecting foil and also bonded to each other.

Accordingly, as shown in FIG. 4, a positive electrode sheet 10 having a positive active material mixture layer 9 on the surface of the current collecting foil 8 is obtained. The current collecting foil 8 is a member functioning as a current collecting member of the positive electrode sheet 10. The positive active material mixture layer 9 is made of positive active material particles, conductive particles, and binder resin. In the positive electrode sheet 10 shown in FIG. 4, the positive active material mixture layer 9 is provided only on one side of the current collecting foil 8. As an alternative, the positive active material mixture layer 9 may be provided on both sides of the current collecting foil 8. In this case, the foregoing process may be performed on each of the front and back sides of the current collecting foil.

Herein, the positive active material and the positive electrode sheet using the positive active material in the present embodiment were produced under various conditions and their properties were evaluated. The results of property evaluation will be described below.

First, the results of an evaluation test for the influence of heat treatment temperature on the positive active material composite particles after the heat treatment (2) will be described. In the present embodiment, the heat treatment temperature was set to the following six levels and the heat treatment time was set to 30 minutes (excluding "no heat treatment"):
No heat treatment, 130°C, 140°C, 150°C, 160°C, 180°C.

After the heat treatment (however, after the compositing for the "No heat treatment"), the surface states of the particles were observed using a scanning electron microscope and evaluated. The evaluation reveals the following results:
- At all the levels including the "No heat treatment", the conductive particles adhere to the surface of each of the positive active material particles. It is considered that the binder resin also exists under the conductive resin.

Further, the positive active material composite particles at the above six levels were subjected to the admixing (3) and then observed using a scanning electron microscope and evaluated. The admixing time was set to the following five levels: 1 min, 10 min, 20 min, 30 min, 45 min.

The observation reveals the following results.
(i) For "No heat treatment", irrespective of admixing time, more particulates not carried on the carrier particles were observed as compared with those in the presence of the heat treatment. It is considered that the particulates are the binder resin and the conductive particles, which have fallen off from the positive active material composite particles during the admixing treatment.
(ii) For the attaching state of the positive active material (composite) particles on the surface of each carrier particle after the admixing treatment, the following tendencies were observed depending on the heat treatment conditions:
   (a) No heat treatment:
      Only a very small amount of attached particles was observed at any admixing time;
   (b) The heat treatment temperatures of 130°C and 140°C:
      A certain amount of attached particles was observed at an admixing time of 20 minutes or more; and
   (c) The heat treatment temperature of 150°C:
      A certain amount of attached particles was observed at an admixing time of 10 minutes or more. In particular, in the case of the heat treatment temperature of 160°C or more and the admixing time of 20 minutes or more, a considerable amount of attached particles is observed.

Subsequently, the deposition (4) and the fixing (5) were performed using the resultant products obtained after the admixing (3), and the positive electrode sheet was observed with a scanning electron microscope. This observation reveals the following results.
(i) It was found that the positive active material mixture layer was formed on the current collecting foil at all temperature levels in the heat treatment. This is conceivably because the binder resin and the conductive particles did not fall away from the positive active material composite particles during the admixing (3) and the admixtures composed of the carrier particles and the positive active material composite particles were formed successfully. It is understandable that this is contributed by the fact that the binder resin melted once to bond the positive active material particles and the conductive particles during the heat treatment (2).
(ii) For "No heat treatment", however, the positive active material mixture layer was not formed. This is conceivably because the admixtures composed of the carrier particles and the positive active material composite particles were not formed during the admixing (3). Since the admixtures were not formed, it is understood that, on the sleeve of the magnet roll, a layer containing only the carrier particles was formed without containing the positive active material composite particles. This conceivably results from that the absence of the heat treatment (2) causes the conductive particles to fall away during the admixing (3) and hence the positive active material composite particles were disassembled.

As described in detail above, the positive active material composite particle in the present embodiment has a structure that the conductive particles bond to the surface of the positive active material particle through the binder resin distributed in a mottled state, each conductive particle having a smaller diameter than the positive active material particle. In the process of producing the positive active material composite particles, the particles after the composition process are subjected to the heat treatment, so that the conductive particles are firmly bonded to each of the positive active material particles through the binder resin. Thus, a deposition layer of the positive active material composite particles can be formed on the current collecting foil by the dry deposition process. Then, through the fixing step, a good positive electrode sheet can be produced.

The foregoing embodiments are merely examples and give no limitation to the present disclosure. The present disclosure may be embodied in other specific forms without departing from the essential characteristics thereof. For example, a treatment apparatus used in each step of the composition, heat treatment, admixing, and deposition is not limited to the devices described above and may be any other types of apparatus having equivalent functions.

In particular, the deposition step may use not only the dry deposition using the above-mentioned electrostatic transfer method but also other types of dry deposition. For example, dry deposition using a gas deposition method may be adopted.

### Reference Signs List

- 1: Positive active material composite particle
- 2: Positive active material particle
- 3: Additive particle, Conductive particle
- 4: Binder resin
- 5: Clearance region
- 8: Current collecting foil
- 9: Positive active material mixture layer
- 10: Positive electrode sheet

## Claims

1. A positive active material composite particle (1) comprising:
a positive active material particle (2);
a conductive particle (3) existing on a surface of the positive active material particle (2) and having a smaller diameter than the positive active material particle (2); and
a binder resin (4) located on the surface of the positive active material particle (2) bonding the surface of the positive active material particle (2) and the conductive particle (3), wherein
the binder resin (4) is distributed in a mottled state to have a plurality of portions spaced with a gap from each other and adhered to the surface of the positive active material particle (2), and
the conductive particle (3) is located on the binder resin (4) distributed in the mottled state.

2. A positive electrode sheet (10) comprising:
a current collecting member (8); and
a positive active material mixture layer (9) provided on a surface of the current collecting member (8),
wherein the positive active material mixture layer (9) is formed by deposition of a raw material including the positive active material composite particle (1) set forth in claim 1 on the surface of the current collecting member (8).

3. A method for producing a positive active material composite particle (1), the method comprising:
mixing a group of positive active material particles (2), a group of conductive particles (3) each having a smaller diameter of each positive active material particle (2), and a group of binder resin (4) particles each having a smaller diameter than each positive active material particle (2) to obtain composite particles in which the conductive particles (3) and the binder resin (4) particles adhere to a surface of each of the positive active material particles (2); and
heating the composite particles obtained in the mixing to temporarily soften the binder resin particles thermally to obtain positive active material composite particles (1) in which the binder resin (4) is distributed in a mottled state to have a plurality of portions spaced with a gap from each other and adhered to the surface of the positive active material particle (2), and the conductive particles (3) are bonded to the surface of each of the positive active material particles (2) through the binder resin (4) which is distributed in a mottled state.

4. A method for producing a positive electrode sheet (10), the method comprising:
depositing positive active material composite particles (1) on a surface of a current collecting member (8) to obtain a deposition layer (9); and
fixing the deposition layer (9) obtained in the depositing on the surface of the current collecting member (8) to form a positive active material mixture layer (9), and
wherein the depositing uses the positive active material composite particles (1) produced by the production method set forth in claim 3.

## Patentansprüche

1. Ein Verbundpartikel aus positivem aktivem Material (1), umfassend:
ein Partikel (2) aus positivem aktivem Material;
ein leitfähiges Partikel (3), das auf einer Oberfläche des Partikels (2) aus positivem aktivem Material vorhanden ist und einen kleineren Durchmesser als das Partikel (2) aus positivem aktivem Material aufweist; und
ein Bindemittelharz (4), das sich auf der Oberfläche des Partikels (2) aus positivem aktivem Material befindet und die Oberfläche des Partikels (2) aus positivem aktivem Material und das leitfähige Partikel (3) verbindet, wobei
das Bindemittelharz (4) in einem gesprenkelten Zustand verteilt ist, so dass es eine Mehrzahl von Teilen aufweist, die mit einem Spalt voneinander beabstandet sind und an der Oberfläche des Partikels (2) aus positivem aktiven Material haften, und
das leitfähige Partikel (3) auf dem Bindemittelharz (4) verteilt in dem gesprenkelten Zustand angeordnet ist.

2. Eine positive Elektrodenlage (10), umfassend:
ein Stromsammelelement (8); und
eine Schicht (9) aus einer Mischung aus positivem aktivem Material, die auf einer Oberfläche des Stromsammelelements (8) bereitgestellt wird,
wobei die Schicht (9) aus einer Mischung aus positivem aktivem Material durch Abscheidung eines Rohmaterials, das das in Anspruch 1 dargelegte Verbundpartikel (1) aus positivem aktivem Material umfasst, auf der Oberfläche des Stromsammelelements (8) gebildet wird.

3. Verfahren zur Herstellung eines Verbundpartikels (1) aus positivem aktivem Material, wobei das Verfahren umfasst:
Mischen einer Gruppe von Partikeln (2) aus positivem aktivem Material, einer Gruppe von leitfähigen Partikeln (3), die jeweils einen kleineren Durchmesser als die Partikel (2) aus positivem aktivem Material aufweisen, und einer Gruppe von Partikeln aus Bindemittelharz (4), die jeweils einen kleineren Durchmesser als die Partikel (2) aus positivem aktivem Material aufweisen, um Verbundpartikel zu erhalten, bei denen die leitfähigen Partikel (3) und die Partikel aus Bindemittelharz (4) an einer Oberfläche jedes der Partikel (2) aus positivem aktivem Material haften; und
Erwärmen der durch das Mischen erhaltenen Verbundpartikel, um die Partikel aus Bindemittelharz vorübergehend thermisch zu erweichen, um Verbundpartikel (1) aus positivem aktivem Material zu erhalten, in denen das Bindemittelharz (4) in einem gesprenkelten Zustand verteilt ist, so dass es eine Mehrzahl von Teilen aufweist, die mit einem Spalt voneinander beabstandet sind und an der Oberfläche des Partikels (2) aus positivem aktivem Material haften, und die leitfähigen Partikel (3) durch das Bindemittelharz (4), das in einem gesprenkelten Zustand verteilt ist, an die Oberfläche jedes der Partikel (2) aus positivem aktivem Material gebunden sind.

4. Verfahren zum Herstellen einer positiven Elektrodenlage (10), wobei das Verfahren umfasst:
Abscheiden von Verbundpartikeln (1) aus positivem aktivem Material auf einer Oberfläche eines Stromsammelelements (8), um eine Abscheidungsschicht (9) zu erhalten; und
Fixieren der durch das Abscheiden erhaltenen Abscheidungsschicht (9) auf der Oberfläche des Stromsammelelements (8), um eine Schicht (9) aus einer Mischung aus positivem aktivem Material zu bilden, und
wobei beim Abscheiden die Verbundpartikel (1) aus positivem aktivem Material verwendet werden, die durch das in Anspruch 3 dargelegte Herstellungsverfahren hergestellt werden.

## Revendications

1. Particule composite de matériau actif positif (1) comprenant :
une particule de matériau actif positif (2) ;
une particule conductrice (3) existant sur une surface de la particule de matériau actif positif (2) et ayant un diamètre plus petit que la particule de matériau actif positif (2) ; et
une résine liante (4) située sur la surface de la particule de matériau actif positif (2) liant la surface de la particule de matériau actif positif (2) et la particule conductrice (3), dans laquelle
la résine liante (4) est répartie dans un état marbré pour avoir une pluralité de parties espacées les unes des autres et collées à la surface de la particule de matériau actif positif (2), et
la particule conductrice (3) est située sur la résine liante (4) répartie à l'état marbré.

2. Feuille d'électrode positive (10) comprenant :
un élément collecteur de courant (8) ; et
une couche de mélange de matériaux actifs positifs (9) disposée sur une surface de l'élément collecteur de courant (8),
dans laquelle la couche de mélange de matériaux actifs positifs (9) est formée par dépôt d'une matière première comprenant la particule composite de matériau actif positif (1) décrite dans la revendication 1 sur la surface de l'élément collecteur de courant (8).

3. Procédé de production d'une particule composite de matériau actif positif (1), le procédé comprenant :
mélanger un groupe de particules de matériau actif positif (2), un groupe de particules conductrices (3) ayant chacune un diamètre inférieur à celui de chaque particule de matériau actif positif (2), et un groupe de particules de résine liante (4) ayant chacune un diamètre inférieur à celui de chaque particule de matériau actif positif (2) pour obtenir des particules composites dans lesquelles les particules conductrices (3) et les particules de résine liante (4) adhèrent à une surface de chacune des particules de matériau actif positif (2) ; et
en chauffant les particules composites obtenues lors du mélange pour ramollir temporairement les particules de résine liante thermiquement afin d'obtenir des particules composites de matériau actif positif (1) dans lesquelles la résine liante (4) est répartie dans un état marbré pour avoir une pluralité de parties espacées les unes des autres et collées à la surface de la particule de matériau actif positif (2), et les particules conductrices (3) sont liées à la surface de chacune des particules de matériau actif positif (2) par l'intermédiaire de la résine liante (4) qui est répartie dans un état marbré.

4. Procédé de production d'une feuille d'électrode positive (10), le procédé comprenant :
déposer des particules composites de matériau actif positif (1) sur une surface d'un élément collecteur de courant (8) pour obtenir une couche de dépôt (9) ; et
fixer la couche de dépôt (9) obtenue lors du dépôt sur la surface de l'élément collecteur de courant (8) pour former une couche de mélange de matériau actif positif (9), et
dans lequel le dépôt utilise les particules composites de matériau actif positif (1) produites par le procédé de production exposé dans la revendication 3.
